# EUROPEAN PATENT APPLICATION

(11) **EP 3 916 872 A1**
(43) Date of publication of application: **01.12.2021**
(21) Application number: 20919358.0
(22) Date of filing: 30.03.2020
(51) Int. Cl.: H01M 10/0525, H01M 10/058

(54) **BATTERY AND ELECTRONIC DEVICE USING BATTERY**

(71) Applicant: Dongguan NVT Technology Limited, Donguan, Guangdong 523000 (CN)
(72) Inventor: YANG, Shujun, Dongguan Guangdong 523000 (CN); NING, Shungang, Dongguan Guangdong 523000 (CN); CHEN, Guanghui, Dongguan Guangdong 523000 (CN); HUANG, Tiejun, Dongguan Guangdong 523000 (CN)
(74) Representative: Klunker IP Patentanwälte PartG mbB
(86) International application number: PCT/CN2020/082123
(87) International publication number: WO 2021/195857

(57) **Abstract**

A battery is provided, which includes a cell and a protection circuit board, where the cell includes a cell body, a first tab, a second tab, and a third tab. The first tab is electrically connected to the cell body and the protection circuit board; the second tab is electrically connected to the cell body and the protection circuit board, and the second tab and the first tab have opposite polarities; and the third tab is electrically connected to the cell body and the protection circuit board, and the third tab and the first tab have the same polarity, thereby slowing temperature rise of the cell and the protection circuit board in use. This application also provides an electric apparatus using the battery.

## Description

### TECHNICAL FIELD

This application relates to the battery field, and in particular, to a battery and an electronic apparatus using the battery.

### BACKGROUND

At present, due to advantages of high energy density, high power density, long cycle life, long storage time, and the like, lithium-ion batteries are widely used in portable electronic devices such as mobile phones, digital cameras, and laptop computers, and have broad application prospects in electric transport means such as electric vehicles and electric bicycles and large- and medium-sized electric devices such as energy storage facilities, becoming the key to addressing global issues such as energy crisis and environmental pollution.

Users' constant pursuit of product performance constantly puts forward new requirements for fast battery charging and higher power output, which poses a great challenge to high efficiency and stability of a battery management circuit. When the battery management circuit needs to carry higher power, heating of battery cells and components causes battery overheating, performance degradation, deterioration of circuit reliability or even damage, and even causes safety problems.

### SUMMARY

In view of the foregoing problem, it is necessary to provide a battery of high stability. It is also necessary to provide an electronic apparatus using such battery.

A battery is provided, including a cell and a protection circuit board, where the cell includes:
a cell body;
a first tab, electrically connected to the cell body and the protection circuit board; and
a second tab, electrically connected to the cell body and the protection circuit board, where the second tab and the first tab have opposite polarities; and
a third tab, electrically connected to the cell body and the protection circuit board, where the third tab and the first tab have the same polarity.

In an embodiment of this application, the first tab and the third tab are electrically connected to the cell body independently of each other.

In an embodiment of this application, the third tab is electrically connected to the cell body through the first tab.

In an embodiment of this application, the protection circuit board includes a circuit board body and at least one connector, where each connector is provided at the circuit board body.

In an embodiment of this application, the circuit board body is a rigid-flex board and includes a rigid board area and a flexible board area connected to the rigid board area, where the first tab, the second tab, and the third tab are connected to the rigid board area, and the connector is provided at the flexible board area.

In an embodiment of this application, the cell further includes a fourth tab electrically connected to the cell body and the protection circuit board, where the fourth tab and the first tab have the same polarity.

In an embodiment of this application, the cell further includes a fourth tab electrically connected to the cell body and the protection circuit board, where the fourth tab and the second tab have the same polarity.

In an embodiment of this application, the fourth tab and the second tab are electrically connected to the cell body independently of each other.

In an embodiment of this application, the fourth tab is electrically connected to the cell body through the second tab.

An electronic apparatus is provided, including the battery according to any one of the embodiments.

In the battery of this application and the electronic apparatus using the battery, the cell outputs voltage through the first tab and the third tab that have the same polarity, thereby reducing concentration of heat during the output of the cell, which is conducive to heat dissipation. In addition, the first tab and the third tab that have the same polarity are separately electrically connected to the protection circuit board, which facilitates wiring in the protection circuit board, making the wiring in the protection circuit board smoother. This effectively reduces the increase in overall impedance of the protection circuit board caused by bending of local wiring, and slows temperature rise of the protection circuit board when the battery is used, thereby improving stability of the battery.

### BRIEF DESCRIPTION OF DRAWINGS

FIG. 1 is a schematic structural diagram of a battery according to an embodiment of this application.
FIG. 2 is a schematic structural diagram of a battery according to an embodiment of this application.
FIG. 3 is a schematic structural diagram of a battery according to an embodiment of this application.
FIG. 4 is a schematic structural diagram of a battery according to an embodiment of this application.
FIG. 5 is a schematic structural diagram of a battery according to an embodiment of this application.
FIG. 6 is a schematic structural diagram of a battery according to an embodiment of this application.

**Reference signs of main components:**

| | |
|---|---|
| Battery | 100 |
| Cell | 10 |
| Protection circuit board | 30 |
| Cell body | 11 |
| First tab | 13 |
| Second tab | 15 |
| Third tab | 17 |
| Circuit board body | 31 |
| Connector | 33 |
| Rigid board area | 311 |
| Flexible board area | 313 |
| First input end | 311a |
| Second input end | 311b |
| Third input end | 311c |
| Fourth tab | 19 |

This application will be further described with reference to the accompanying drawings in the following specific embodiments.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

Unless otherwise defined, all technical and scientific terms used herein shall have the same meanings as commonly understood by those skilled in the art to which this application belongs. The terms used herein in the specification of this application are only used to describe specific embodiments, and are not intended to limit this application.

The following describes in detail some embodiments of this application with reference to the accompanying drawings. In absence of conflicts, the following embodiments and features in the embodiments may be combined.

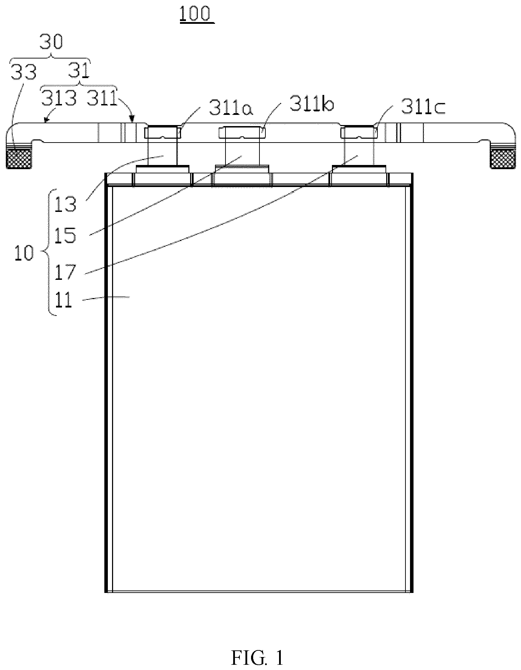

Referring to FIG. 1, according to an embodiment of this application, a battery 100 includes a cell 10 and a protection circuit board 30. The cell 10 is electrically connected to the protection circuit board 30.

The cell 10 includes a cell body 11, a first tab 13, a second tab 15, and a third tab 17. One end of the first tab 13 is electrically connected to the cell body 11, and the other end of the first tab 13 is electrically connected to the protection circuit board 30. The second tab 15 and the first tab 13 have opposite polarities, and one end of the second tab 15 is electrically connected to the cell body 11, and the other end of the second tab 15 is electrically connected to the protection circuit board 30. The third tab 17 and the first tab 13 have the same polarity, and one end of the third tab 17 is electrically connected to the cell body 11, and the other end of the third tab 17 is electrically connected to the protection circuit board 30. The cell 10 outputs voltage through the first tab 13 and the third tab 17 that have the same polarity, reducing concentration of heat during the output of the cell 10 and facilitating heat dissipation. In addition, the first tab 13 and the third tab 17 that have the same polarity are separately electrically connected to the protection circuit board 30, and an internal circuit of the protection circuit board 30 can be electrically connected to the first tab 13 or the third tab 17 based on needs, to reduce wire bending or wire extension caused by avoiding device interference. This facilitates wiring in the protection circuit board 30, making the wiring in the protection circuit board 30 smoother, and helping reduce overall impedance of the protection circuit board 30, thereby slowing temperature rise of the protection circuit board 30 when the battery is used.

In this implementation, the first tab 13 and the third tab 17 are positive tabs, and the second tab 15 is a negative tab. In some other embodiments, both the first tab 13 and the third tab 17 may be negative tabs, and in this case, the second tab 15 is a positive tab.

The first tab 13 and the third tab 17 are electrically connected to the cell body 11 independently of each other.

In this embodiment, the first tab 13 is spaced apart from the third tab 17. Preferably, the second tab 15 is provided between the first tab 13 and the third tab 17, and is spaced apart from both the first tab 13 and the third tab 17. This is more convenient for subsequent wiring of the protection circuit board 30.

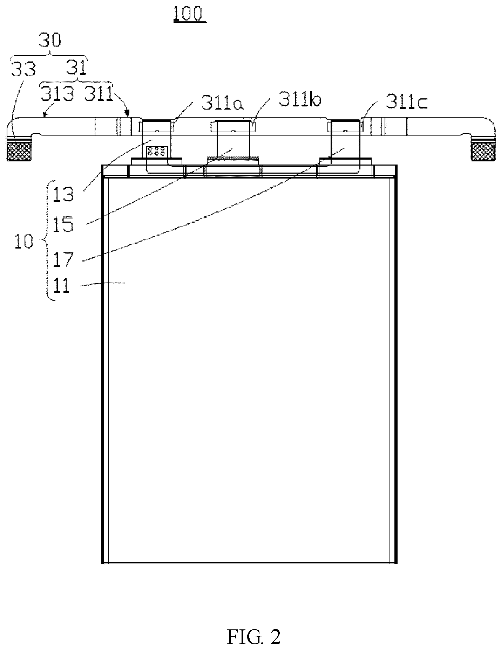

In some embodiments of this application, referring to FIG. 2, the third tab 17 is electrically connected to the cell body 11 through the first tab 13. Specifically, one end of the first tab 13 is electrically connected to the cell body 11, and the other end of the first tab 13 is electrically connected to the protection circuit board 30. One end of the third tab 17 is electrically connected to the first tab 13, and the other end of the third tab 17 is electrically connected to the protection circuit board 30. In some embodiments, the third tab 17 may be connected to the first tab 13 through a nickel tape or a flexible circuit board.

The protection circuit board 30 includes a circuit board body 31 and at least one connector 33. The connector 33 is provided on the circuit board body 31.

In some embodiments, referring to FIG. 1 and FIG. 2, the circuit board body 31 is a rigid-flex board and includes a rigid board area 311 and a flexible board area 313 connected to the rigid board area 311. The rigid board area 311 and the flexible board area 313 are integrally designed. The connector 33 is provided at the flexible board area 313.

The rigid board area 311 includes a first input end 311a, a second input end 311b, and a third input end 311c that are spaced apart. The first input end 311a is electrically connected to the first tab 13, the second input end 311b is electrically connected to the second tab 15, and the third input end 311c is electrically connected to the third tab 17.

In this embodiment, the circuit board body 31 includes two flexible board areas 313 and two connectors 33, and the rigid board area 311 is located between the two flexible board areas 313. Preferably, one flexible board area 313 is provided adjacent to the first tab 13, and the other flexible board area 313 is provided adjacent to the third tab 17. Each flexible board area 313 is provided with one connector 33. Each connector 33 is electrically connected to the first input end 311a or the third input end 311c, and each connector 33 is electrically connected to the second input end 311b.

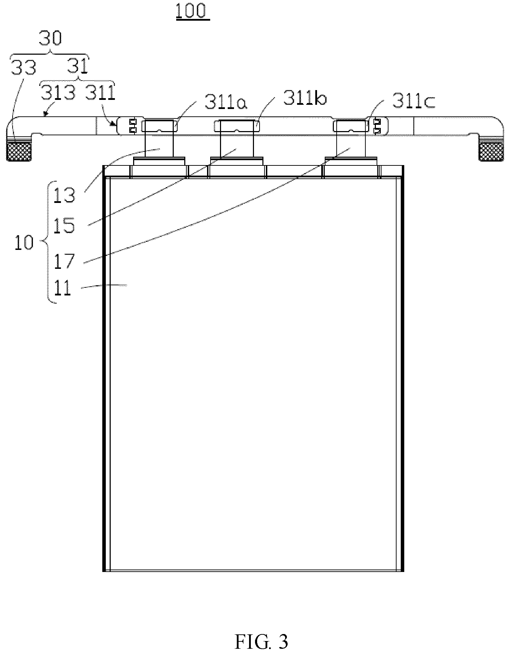

In some embodiments, referring to FIG. 3, the rigid board area 311 and the flexible board area 313 are connected through welding, which is lower in cost than an integrally designed rigid-flex board.

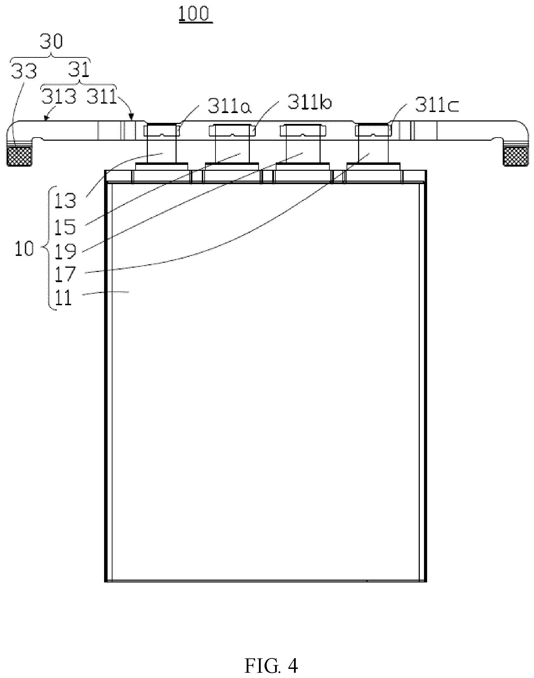

In some embodiments, referring to FIG. 4, the cell 10 may further include a fourth tab 19 electrically connected to the cell body 11 and the protection circuit board 30. The fourth tab 19 and the second tab 15 have the same polarity, and the fourth tab 19 and the second tab 15 are electrically connected to the cell body 11 independently of each other. The cell 10 outputs voltage through the fourth tab 19 and the second tab 15 that have the same polarity, further reducing concentration of heat during the output of the cell 10 and facilitating heat dissipation. In addition, the fourth tab 19 and the second tab 15 that have the same polarity are separately electrically connected to the protection circuit board 30, which further facilitates the wiring in the protection circuit board 30, thereby further slowing the temperature rise of the protection circuit board 30 when the battery is used.

As shown in FIG. 4, the fourth tab 19 may be provided between the first tab 13 and the third tab 17, and is spaced apart from the first tab 13, the second tab 15, and the third tab 17. The fourth tab 19 may alternatively be provided on a side of the third tab 17 farther away from the second tab 15. Preferably, the first tab 13 and the adjacent second tab 15 are electrically connected to the connector 33 adjacent to the first tab 13. The third tab 17 and the adjacent fourth tab 19 are electrically connected to the connector 33 adjacent to the third tab 17, which is more convenient for the wiring in the protection circuit board 30.

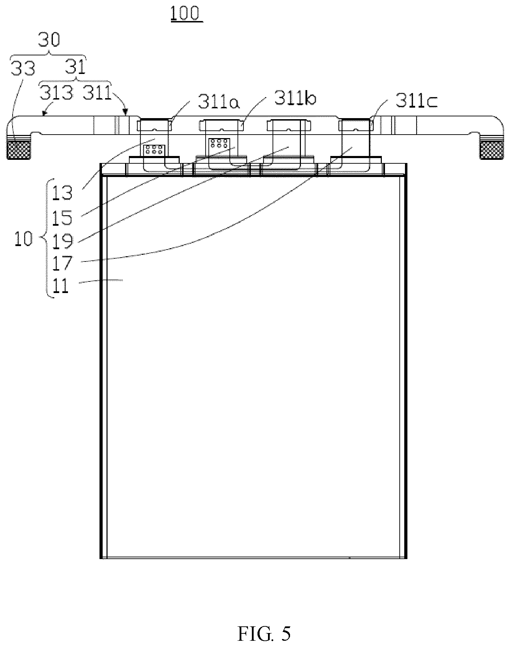

In some embodiments, referring to FIG. 5, the fourth tab 19 is electrically connected to the cell body 11 through the second tab 15. Specifically, one end of the second tab 15 is connected to the cell body 11, and the other end of the second tab 15 is connected to the protection circuit board 30. One end of the fourth tab 19 is electrically connected to the second tab 15 and the other end of the fourth tab 19 is electrically connected to the protection circuit board 30. In some embodiments, the fourth tab 19 may be connected to the second tab 15 through a nickel tape or a flexible circuit board.

In some embodiments, the fourth tab 19 may have the same polarity as the first tab 13. That is, there may be a plurality of tabs having the same polarity as the first tab 13. From this, it can be learned that there may be a plurality of tabs having the same polarity as the second tab 15.

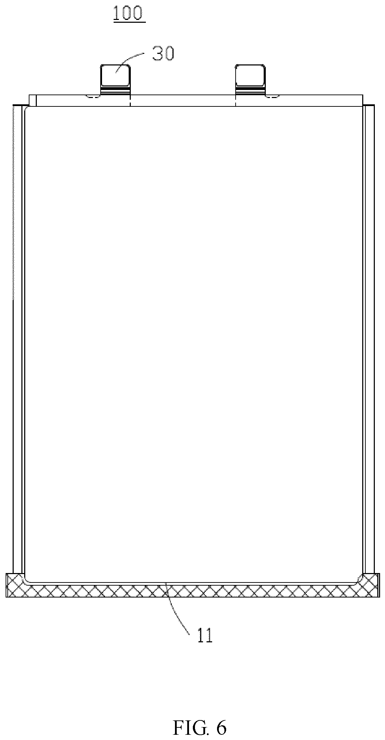

In this embodiment, referring to FIG. 6, the rigid board area 311 is folded toward the cell body 11, and the flexible board area 313 is folded toward the rigid board area 311, to reduce an overall volume of the battery 100.

The battery 100 is applied to an electronic apparatus (not shown) to supply power to electronic components of the electronic apparatus. The electronic apparatus may be, but is not limited to, a mobile phone, a computer, an electric toy, an electric vehicle, or the like.

In addition, a person of ordinary skill in the art can make various other corresponding changes and modifications according to the technical concept of this application, and all such changes and modifications should fall within the protection scope of this application.

## Claims

1. A battery, comprising a cell and a protection circuit board, wherein the cell comprises:
a cell body;
a first tab, electrically connected to the cell body and the protection circuit board; and
a second tab, electrically connected to the cell body and the protection circuit board, wherein the second tab and the first tab have opposite polarities; and
the cell further comprises:
a third tab, electrically connected to the cell body and the protection circuit board, wherein the third tab and the first tab have the same polarity.

2. The battery according to claim 1, **characterized in that** the first tab and the third tab are electrically connected to the cell body independently of each other.

3. The battery according to claim 1, **characterized in that** the third tab is electrically connected to the cell body through the first tab.

4. The battery according to claim 1, **characterized in that** the protection circuit board comprises a circuit board body and at least one connector, wherein each connector is provided at the circuit board body.

5. The battery according to claim 4, **characterized in that** the circuit board body is a rigid-flex board and comprises a rigid board area and a flexible board area connected to the rigid board area, wherein the first tab, the second tab, and the third tab are connected to the rigid board area, and the connector is provided at the flexible board area.

6. The battery according to claim 1, **characterized in that** the cell further comprises a fourth tab electrically connected to the cell body and the protection circuit board, wherein the fourth tab and the first tab have the same polarity.

7. The battery according to claim 1, **characterized in that** the cell further comprises a fourth tab electrically connected to the cell body and the protection circuit board, wherein the fourth tab and the second tab have the same polarity.

8. The battery according to claim 7, **characterized in that** the fourth tab and the second tab are electrically connected to the cell body independently of each other.

9. The battery according to claim 7, **characterized in that** the fourth tab is electrically connected to the cell body through the second tab.

10. An electronic apparatus, **characterized by** comprising the battery according to any one of claims 1 to 9.
